# EUROPEAN PATENT APPLICATION

(11) **EP 3 364 384 A1**
(43) Date of publication of application: **22.08.2018**
(21) Application number: 18152497.6
(22) Date of filing: 19.01.2018
(51) Int. Cl.: G07G 1/00, G07G 1/01, G06Q 20/20

(54) **INFORMATION PROCESSING APPARATUS AND INFORMATION PROCESSING METHOD**

(30) Priority: 20.02.2017 JP 2017029086
(71) Applicant: Toshiba TEC Kabushiki Kaisha, Tokyo 141-0032 (JP)
(72) Inventor: Sasaki, Yuta, Tokyo, 141-8562 (JP); Iizaka, Hitoshi, Tokyo, 141-8562 (JP); Miyakoshi, Hidehiko, Tokyo, 141-8562 (JP); Naito, Hidehiro, Tokyo, 141-8562 (JP); Hatanaka, Yuichiro, Tokyo, 141-8562 (JP)
(74) Representative: Hoffmann Eitle

(57) **Abstract**

In one embodiment, an information processing apparatus has an imaging device, a memory, a display and a processor. The processor extracts, based on similarities of an imaged image by the imaging device and reference images of a plurality of commodities which are previously stored in the memory, at least one commodity from the plurality of commodities as a candidate for the commodity imaged by the imaging device. The processor controls the display to display the extracted candidates for commodity in the commodity selection screen in a display form in which the extracted candidates for commodity are weighted in accordance with sizes of the similarities.

## Description

### CROSS-REFERENCE TO RELATED APPLICATION

This application is based upon and claims the benefit of priority from the prior Japanese Patent Application No. 2017-029086, filed on February 20, 2017, the entire contents of which are incorporated herein by reference.

### FIELD

Embodiments described herein relate generally to an information processing apparatus and an information processing method.

### BACKGROUND

Conventionally, there is a technology relating to object recognition (general object recognition) which extracts a feature amount of an object to be imaged from an imaged image imaged by an image sensor, and recognizes, in accordance with similarities of the extracted feature amount and the feature amounts of the reference images, a commodity of the reference image having the high similarity as a commodity candidate.

In addition, a technology is proposed which performs identification of a commodity to the commodity such as fruit and vegetable to which a bar code has not been attached, using this object recognition technology, and reads out commodity information such as a commodity name and a commodity price from a commodity master, and performs sales registration of the commodity.

In the object recognition technology, since color shade and a surface shape of an object on the imaged image are changed, depending on what portion of a commodity is held over an image sensor and in what method the commodity is held over, a commodity candidate which is deemed to be similar and a similarity to the relevant commodity candidate are also changed.

Accordingly if a method of holding over a commodity such that the similarity to the reference image is increased is used, it is possible to effectively perform the commodity recognition, and accordingly, it is possible to improve efficiency of the sales registration.

However, in the conventional technology, there has been a problem that it is difficult to know in what method a commodity is held over, the similarity is increased and the commodity identification is easily performed.

### SUMMARY OF THE INVENTION

One of the objects of the present invention is to improve prior art techniques and overcome at least some of the prior art problems as for instance above illustrated.

According to a first aspect of the present invention, it is provided an information processing apparatus, comprising:
an imaging device which images a commodity and outputs an imaged image of the commodity;
a memory which previously stores reference images of a plurality of commodities for each of the plurality of commodities;
a display which displays a commodity selection screen including candidates for the imaged commodity, the commodity selection screen accepting an operation to select any one candidate for commodity out of the displayed candidates for commodity; and
a processor which
extracts at least one commodity rom the plurality of commodities stored in the memory as the candidate for commodity, based on similarities of the imaged image and the reference images of the plurality of commodities,
controls the display to display the extracted candidates for commodity in the commodity selection screen, in a display form in which the extracted candidates for commodity are weighted in accordance with sizes of the similarities, and
outputs commodity information indicating the candidate for commodity selected via the commodity selection screen.

According to a second aspect of the present invention, it is provided an information processing method of an information processing apparatus having an imaging device which images a commodity and outputs an imaged image of the commodity, a memory which previously stores reference images of a plurality of commodities for each of the plurality of commodities, and a display which displays a commodity selection screen including candidates for the imaged commodity, comprising:
extracting at least one commodity from the plurality of commodities stored in the memory as the candidate for the imaged commodity, based on similarities of the imaged image and the reference images of the plurality of commodities;
controlling the display to display the extracted candidates for commodity in the commodity selection screen, in a display form in which the extracted candidates for commodity are weighted in accordance with sizes of the similarities;
accepting an operation to select the candidate for commodity via the commodity selection screen; and
outputting commodity information indicating the candidate for commodity which has been selected by accepting the operation.

### BRIEF DESCRIPTION OF THE DRAWINGS

Fig. 1 is a perspective view showing an example of a checkout system according to an embodiment.
Fig. 2 is a block diagram showing a hardware configuration of the POS terminal and the commodity reading apparatus according to the embodiment.
Fig. 3 is a conceptual diagram exemplifying a data configuration of the PLU file according to the embodiment.
Fig. 4 is a block diagram showing a functional configuration of the POS terminal according to the embodiment.
Fig. 5 is a diagram showing an example of a reading screen to be displayed on the display for a salesclerk of the commodity reading apparatus according to the embodiment.
Fig. 6 is a diagram showing an example of the reading screen to be displayed on the display for a salesclerk of the commodity reading apparatus when the similarities are changed by a new imaged image in the embodiment.
Fig. 7 is a diagram showing an example of the reading screen including the display of an automatic registration line to be displayed on the display for a salesclerk of the commodity reading apparatus according to the embodiment.
Fig. 8 is a diagram showing an example of the reading screen to be displayed on the display for a salesclerk of the commodity reading apparatus according to the embodiment in the case of changing color densities of the selection icons, in accordance with the similarities.
Fig. 9 is a diagram showing an example of the reading screen to be displayed on the display for a salesclerk of the commodity reading apparatus according to the embodiment in the case of changing display sizes of the selection icons, in accordance with the similarities.
Fig. 10 is a flow chart showing a reading processing and a registration processing which the POS terminal according t0 the embodiment executes.

### DETAILED DESCRIPTION

According to one embodiment, an information processing apparatus has an imaging device, a memory, a display, and a processor.

The imaging device images a commodity and outputs an imaged image of the commodity.

The memory previously stores reference images of a plurality of commodities for each of the plurality of commodities.

The display displays a commodity selection screen including candidates for the imaged commodity. The commodity selection screen accepts an operation to select any one candidate for commodity out of the displayed candidates for commodity.

The processor extracts at least one commodity from the plurality of commodities stored in the memory as the candidate for commodity, based on similarities of the imaged image and the reference images of the plurality of commodities. The processor controls the display to display the extracted candidates for commodity in the commodity selection screen, in a display form in which the extracted candidates for commodity are weighted in accordance with sizes of the similarities. Further, the processor outputs commodity information indicating the candidate for commodity selected via the commodity selection screen.

Hereinafter, a checkout system to be introduced into a store such as a supermarket will be described with reference to the drawings, as an application example of an information processing apparatus and an information processing method according to an embodiment. However, the present embodiment is not at all limited to this application example.

In the drawings, the same symbols indicate the same or the similar portions.

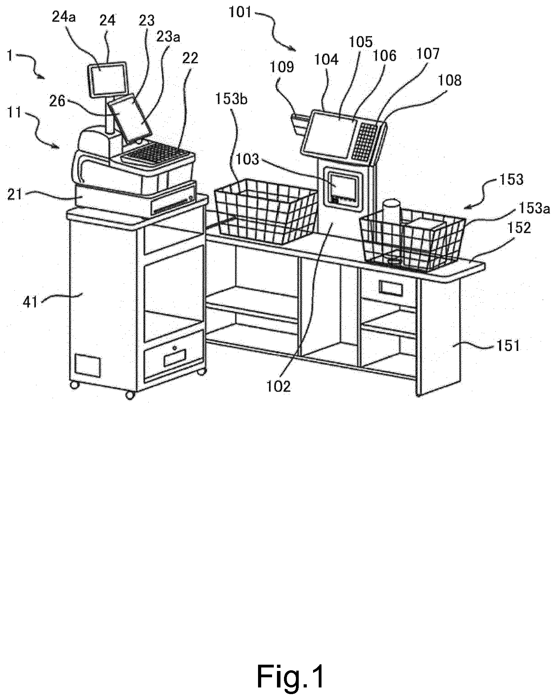

Fig. 1 is a perspective view showing an example of a checkout system 1 according to the embodiment.

As shown in Fig. 1, the checkout system 1 has a commodity reading apparatus 101 which reads out information relating to a commodity, and a POS terminal 11 which performs sales registration and settlement of commodities relating to one transaction.

Hereinafter, an example in which the POS terminal 11 is particularly applied to the checkout system 1, as the information processing apparatus according to the present embodiment will be described.

The POS terminal 11 is provided on the upper surface of a drawer 21 on a checkout table 41.

The POS terminal 11 controls opening of the drawer 21.

The POS terminal 11 has a keyboard 22 on the upper surface thereof.

The keyboard 22 includes a key for accepting an operation of an operator (a salesclerk, for example) for inputting.

In addition, the POS terminal 11 has a display 23 for a salesclerk.

The display 23 for a salesclerk is provided at the back side from the keyboard 22 seen from the operator operating the keyboard 22. The display 23 for a salesclerk displays information toward the operator. The display 23 for a salesclerk has a display surface 23a in which a touch panel 26 has been laminated.

In addition, the POS terminal 11 has a display 24 for a customer.

The display 24 for a customer is provided at a more back side than the display 23 for a salesclerk. The display 24 for a customer has a display surface 24a for displaying information toward a customer.

In addition, the display 24 for a customer shown in Fig. 1 directs the display surface 24a toward the front side of Fig. 1.

However, the display 24 for a customer is rotated so that the display surface 24a is directed toward the back side of Fig. 1, and thereby it can display information toward the customer.

A counter table 151 shown in Fig. 1 is a horizontally long table.

The counter table 151 is arranged so as to form an L-letter with the checkout table 41 above which the POS terminal 11 is provided.

The counter table 151 includes a load receiving surface 152 at the upper surface thereof.

The load receiving surface 152 is used so that shopping baskets 153 for housing commodities is placed on it.

The shopping baskets 153 include a first shopping basket 153a and a second shopping basket 153b.

The first shopping basket 153a is a basket into which a customer has put a commodity to be purchased.

The second shopping basket 153b is a basket into which a commodity that has been subjected to the sales registration processing by the commodity reading apparatus 101 is to be put.

The second shopping basket 153b is placed at a position of a side opposite to the first shopping basket 153a across the commodity reading apparatus 101.

The shape of the shopping basket 153 is not limited to a so-called basket shape, but may be a tray shape, a box shape or a bag shape.

The commodity reading apparatus 101 is provided on the load receiving surface 152 of the counter table 151.

The commodity reading apparatus 101 can transmit/receive data with the POS terminal 11.

The commodity reading apparatus 101 has a housing 102 of a thin and rectangular shape.

The housing 102 has a reading window 103 at the front surface thereof.

The housing 102 has an operation device 104 at the upper portion thereof.

The operation device 104 has a display 106 for a salesclerk that is a display portion in a surface of which a touch panel 105 has been laminated.

The operation device 104 has a keyboard 107 provided in the right neighborhood of the display 106 for a salesclerk.

The operation device 104 has a card reading groove 108 provided in the right neighborhood of the keyboard 107.

The card reading groove 108 is a groove through which a card to be presented by a customer is to be inserted to a card reader not shown that performs reading and writing of information to the relevant card.

Further, the operation device 104 has a display 109 for a customer.

The display 109 for a customer is provided toward a customer at the back left side of the rear surface of the operation device 104 seen from the operator, and displays information to be presented to the customer.

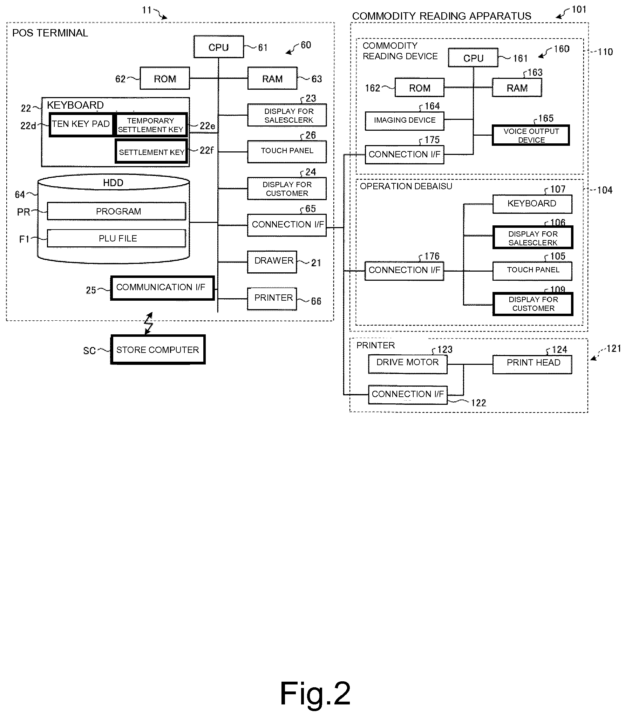

The commodity reading apparatus 101 like this has a commodity reading device 110 (refer to Fig. 2).

The commodity reading device 110 has an imaging device 164 (refer to Fig. 2) arranged at the back side of the reading window 103.

An operator who operates the commodity reading apparatus 101 moves a commodity in the first shopping basket 153a into the second shopping basket 153b.

The operator holds the commodity over the reading window 103 of the commodity reading apparatus 101 during this moving process.

At this time, the imaging device 164 (refer to Fig. 2) arranged within the reading window 103 images the commodity.

The commodity reading apparatus 101 notifies the POS terminal 11 of a commodity ID of the commodity to be subjected to the sales registration processing. The commodity ID is data for identifying the commodity.

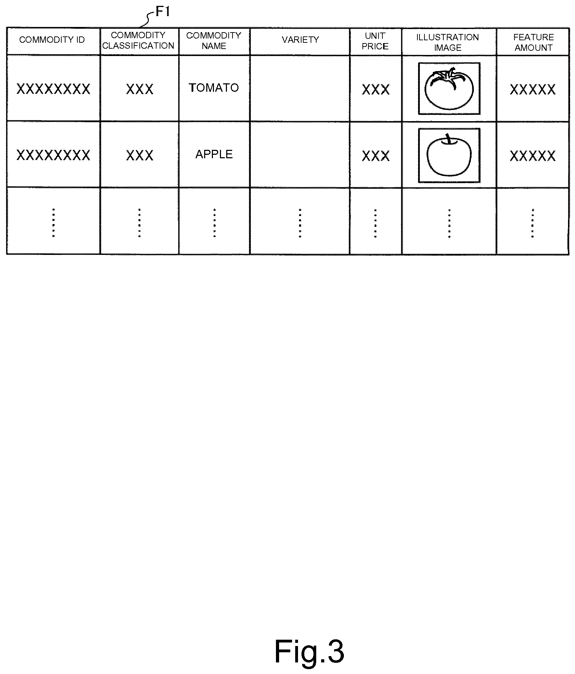

Specifically, the commodity reading apparatus 101 makes a commodity selection screen (a reading screen 70 described later) to be displayed on the display 106 for a salesclerk of the operation device 104. Here, the commodity selection screen accepts an operation of an operator to select to what commodity of the commodities stored in a PLU file F1 (refer to Fig. 3), the commodity to be subjected to the sales registration processing corresponds.

And the commodity reading apparatus 101 notifies the POS terminal 11 of the commodity ID of the above-described designated commodity.

The POS terminal 11 registers information relating to the sales registration processing in a sales file (not shown), based on the commodity ID notified from the commodity reading apparatus 101, and performs the sales registration processing.

The information relating to the sales registration processing includes a commodity classification, a commodity name, a commodity price of the commodity corresponding to the commodity ID, for example.

Fig. 2 is a block diagram showing a hardware configuration of the POS terminal 11 and the commodity reading apparatus 101.

The POS terminal 11 has a microcomputer 60, as an information processing section which executes an information processing.

The microcomputer 60 has a processor 61, a ROM (Read Only Memory) 62, a RAM (Random Access Memory) 63. The processor 61 is a CPU (Central Processing Unit), for example. Hereinafter, the processor 61 may be called the CPU 61.

In the microcomputer 60, the CPU 61 which executes various calculation processings to control the respective sections, the ROM 62, and the RAM 63 are connected by a bus.

The CPU 61 of the POS terminal 11 connects to the drawer 21, the keyboard 22, the display 23 for a salesclerk, the touch panel 26, and the display 24 for a customer, via various input/output circuits (not shown).

These devices are controlled by the CPU 61.

The keyboard 22 has a ten-key pad 22d composed of numeric character keys and operator keys, for example, a temporary settlement key 22e, and a settlement key 22f.

The CPU 61 of the POS terminal 11 connects to an HDD (Hard Disk Drive) 64.

The HDD 64 stores a program and various files.

At the time of starting the POS terminal 11, the CPU 61 expands the program and the whole or a part of the various files which the HDD 64 stores in the RAM 63, to execute the program.

The HDD 64 stores a program PR and the PLU file F1.

In addition, the HDD 64 has only to be a storage device, and may be another storage device such as an SSD (Solid State Drive), for example.

The program PR is a program for realizing a function in which the CPU 61 controls the commodity reading apparatus 101 to read various information, a function in which the CPU 61 identifies a commodity by object recognition, and so on.

The PLU file F1 is a commodity file which, regarding each of commodities to be displayed and to be sold in the store, stores information relating to the sales registration processing of the commodity.

In addition, the PLU file F1 of the present embodiment stores collation data used in the object recognition.

Fig. 3 is a conceptual diagram exemplifying a data configuration of the PLU file F1.

As shown in Fig. 3, the PLU file F1 stores commodity information of each commodity in association with a commodity ID that is an identifier of each commodity.

The commodity information includes information such as a commodity classification, a commodity name, a variety, and a unit price.

In addition, the PLU file F1 stores an illustration image of each commodity, and the reference imaged image of the commodity in association with the commodity ID. In addition, the above-described reference imaged image is specifically a feature amount of the reference imaged image (collation data).

As the above-described illustration image, image data of illustration in which the relevant commodity has been drawn is stored the PLU file F1.

The relevant illustration image is used when the identification result by the object recognition is displayed on the display 106 for a salesclerk.

For example, the above-described illustration image is displayed on the display 106 for a salesclerk, so that a candidate for an object (a commodity candidate) which has become an object to be imaged as a result of the identification is presented to the operator.

In addition, as the substitute for the illustration image, an image in which the commodity alone is imaged may be used along with a background which makes the commodity to be easily visually recognized.

The above-described feature amount (the feature amount of the reference image) is numeric data which is used as the collation data for object recognition.

The feature amount is numeric data which has been extracted from the reference image in which each commodity has been imaged. The feature amount is numeric data indicating features of the outer appearance of a commodity, such as a surface shape, a shade of a surface, a pattern, unevenness of the commodity.

In the PLU file F1, the feature amount which has been previously extracted from the reference image in which each commodity has been imaged is stored for each commodity.

In addition, generally, a value obtained by averaging feature amounts extracted from a plurality of the reference images is stored in the PLU file F1, as the feature amount.

In the object recognition, a feature amount is extracted in real time from an imaged image by the imaging device 164. Further, similarities between the extracted feature amount and the respective feature amounts for collation which are stored in the PLU file F1 are calculated.

And in the object recognition, a commodity having the above-described high similarity is automatically determined as a commodity (a determined commodity) that is an object to be imaged. Or, a commodity having the above-described high similarity is extracted as a candidate (a commodity candidate) for a commodity having a high possibility of being an object to be imaged.

In addition, as the data for collation, not the feature amount, but the reference image itself may be stored in the PLU file F1. In this case, calculation of similarities between the imaged image and the respective reference images are performed in the recognition processing.

Returning to Fig. 2, the POS terminal 11 has a communication I/F (Interface) 25.

The CPU 61 connects to the communication I/F (Interface) 25 via an input/output circuit (not shown). The communication I/F (Interface) 25 executes data communication with a store computer SC.

The store computer SC is installed on a backyard or the like of the store. In an HDD (not shown) of the store computer SC, the PLU file F1 to be delivered to the POS terminal 11 is stored.

Further, the POS terminal 11 has a connection I/F 65.

The CPU 61 connects to the connection I/F 65.

The connection I/F 65 connects to the commodity reading apparatus 101, and executes transmission/reception of data with the commodity reading apparatus 101.

In addition, a printer 66 which performs printing on a receipt or the like is connected to the CPU 61 of the POS terminal 11.

The printer 66 prints the transaction content of one transaction on a receipt under the control of the CPU 61.

The commodity reading apparatus 101 has a microcomputer 160.

The microcomputer 160 has a processor 161, a ROM 162, and a RAM 163. The processor 161 is a CPU, for example. Hereinafter, the processor 161 is called the CPU 161.

In the microcomputer 160, the CPU 161, the ROM 162, and the RAM 163 are connected by a bus.

The ROM 162 stores a program which the CPU 161 executes.

The CPU 161 connects to the imaging device 164 and a voice output device 165 via respective input/output circuits (any of them is not shown).

The CPU 161 controls operations of the imaging device 164 and the voice output device 165.

The operation device 104 connects to the commodity reading device 110 and the POS terminal 11 via a connection I/F 176.

Operation of the operation device 104 is controlled by the CPU 161 of the commodity reading device 110 and the CPU 61 of the POS terminal 11.

The imaging device 164 has an image sensor (not shown) such as a color CCD image sensor or a color CMOS image sensor, and a light source (not shown) such as an LED.

The imaging device 164 performs imaging of a prescribed imaging range defined by the reading window 103 from the inside of the reading window 103 under the control of the CPU 161.

The imaging device 164 images a moving image of the prescribed imaging range at a frame rate of 30 fps (Flame Per Second), for example, to output frame images.

The frame images (imaged images) which have been imaged and outputted sequentially by the imaging device 164 at the prescribed frame rate are stored in the RAM 163, for example.

The voice output device 165 includes a voice circuit for generating predetermined warning sound or the like and a speaker or the like.

The voice output device 165 performs notification by warning sound or voice under the control of the CPU 161.

Further, the CPU 161 connects to the connection I/F 175.

The connection I/F 175 connects to the connection I/F 65 of the POS terminal 11, to transmit/receive data with the POS terminal 11.

In addition, the connection I/F 175 connects to the connection I/F 176 of the operation device 104, to transmit/receive data with the operation device 104.

Further, the connection I/F 65 can connect to a printer 121. The printer 121 that is a printing section is an image forming apparatus which prints a document and papers such as an image.

The printer 121 has a connection I/F 122, a drive motor 123, and a print head 124.

The connection I/F 122 connects to the connection I/F 65 of the POS terminal 11, to transmit/receive data with the POS terminal 11.

The drive motor 123 drives a conveying mechanism for conveying a sheet that is a printing object. The print head 124 performs printing on a sheet to be conveyed.

Next, a functional configuration of the POS terminal 11 which is realized as a result that the POS terminal 11 executes the program PR will be described.

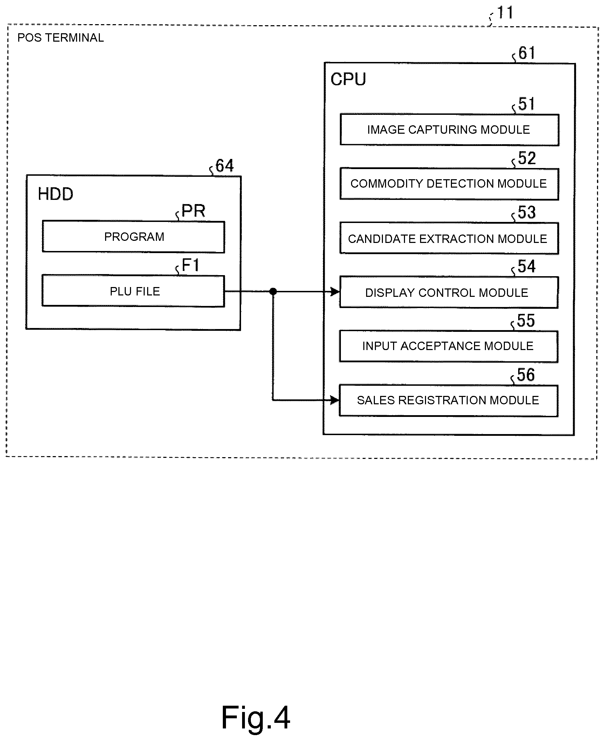

Fig. 4 is a block diagram showing a functional configuration of the POS terminal 11.

The program PR to be executed in the POS terminal 11 of the present embodiment is provided while being previously incorporated in the HDD 64.

In addition, the program PR may be provided while being previously incorporated in the ROM 62.

In addition, the program PR may be provided while being recorded in a computer readable recording medium, such as a CD-ROM, a flexible disk (FD), a CD-R, a DVD (Digital Versatile Disk) in a file of an installable format or an executable format.

Further, the program PR may be stored on a computer connected to a network such as Internet, and may be provided by being downloaded through the network. In addition, the program PR may be provided or distributed via a network such as Internet.

The program PR which the CPU 61 of the POS terminal 11 of the present embodiment executes includes an image capturing module 51, a commodity detection module 52, a candidate extraction module 53, a display control module 54, an input acceptance module 55, and a sales registration module 56, as shown in Fig. 4.

That is, the CPU 61 (refer to Fig. 2) reads out the program PR from the HDD 64, and loads the above-described respective modules on the RAM 63 (the main storage device). By this means, the above-described respective modules are generated on the RAM 63 (the main storage device). By this means, the CPU 61 functions as the respective modules.

The image capturing module 51 outputs an imaging control signal to the imaging device 164, to make the imaging device 164 start an imaging operation.

By this means, the imaging device 164 images a commodity (that is a commodity within the above-described prescribed imaging range) which is held over the imaging device 164 via the reading window 103.

And the imaged images (the frame images) of the commodity which has been held over the imaging device 164 are stored in the RAM 163.

After the imaging operation is started, the image capturing module 51 captures the imaged images from the imaging device 164. That is, the image capturing module 51 once stores the imaged images outputted from the imaging device 164 in the RAM 163. Further, the image capturing module 51 reads out the imaged images one by one frame from the RAM 163 in the order of being stored in the RAM 163.

Incidentally, when a commodity is not present in the vicinity of the light source of the imaging device 164, that is, in the vicinity of the reading window 103 (when a commodity is not present within the above-described prescribed imaging range), the imaging device 164 outputs an imaged image of brightness 0 or in a state similar thereto.

And when a commodity (an object) to be recognized is approximated to the reading window 103, light from the light source is reflected by the commodity (the object), and thereby the brightness of the imaged image is increased.

The image capturing module 51 detects the brightness change like this (change in the attribute of color), and when the brightness is not less than a prescribed reference value, the image capturing module 51 determines that the commodity (the object) is in a state to be held over the reading window 103.

On the other hand, when the brightness is lower than the prescribed reference value, the image capturing module 51 determines that the commodity (the object) is in a state not to be held over the reading window 103, that is, in a framed-out state.

The commodity detection module 52 detects an image area in which at least a part of the commodity has been imaged, from the imaged image which the image capturing module 51 has captured, using a pattern matching technology or the like.

Specifically, the commodity detection module 52 extracts a contour line or the like, from an image obtained by binarizing the captured imaged image for each frame.

The commodity detection module 52 compares the contour line extracted from the previous frame image and the contour line extracted from the frame image of this time.

And, the commodity detection module 52 recognizes an object having the newly extracted contour line as the commodity.

By this means, the commodity detection module 52 detects the commodity which has been held over the reading window 103.

In addition, the method for the commodity detection module 52 to detect a commodity is not limited to the above-described method, but a detection method which has been used conventionally may appropriately be used.

The candidate extraction module 53 (the commodity candidate extraction means) extracts at least one commodity candidate that becomes a candidate for the commodity which the imaging device 164 has imaged, based on similarities of the imaged image of the imaging device 164 and the reference images of the respective commodities.

More specifically, the candidate extraction module 53 extracts a feature amount of the image area, from the image area which the commodity detection module 52 has extracted, that is, from an image area in which at least a part of the commodity has been imaged.

In addition, the candidate extraction module 53 shall not consider the contour or size of the object to be imaged, at the time of calculating the feature amount, in order to shorten the processing time.

In addition, the candidate extraction module 53 compares the feature amount extracted from the imaged image for one frame with the feature amount of the reference image of each commodity (hereinafter, called a registered commodity) which the PLU file F1 stores, and calculates a similarity between them. This calculation is repeated as many times as the number of the registered commodities.

Here, when the feature amount of the registered commodity which the PLU file F1 stores is set to 100% (= "similarity: 1.0"), the similarity indicates in what degree the feature amount of the object to be imaged (that is the commodity) which has been extracted from the imaged image is similar to the feature amount of the registered commodity.

In addition, the candidate extraction module 53 may calculate the similarity by changing weighting in accordance with color shade and unevenness of the surface.

The technology to identify an object contained in an imaged image like this is generally called object recognition, or generic object recognition or the like.

Regarding the processing relating to the object recognition, the conventional technology can be used.

The candidate extraction module 53 compares the similarity calculated as described above with a first threshold value or a second threshold value, to perform a threshold value determination.

That is, when a registered commodity having the similarity of not less than the first threshold value is present in the PLU file F1, the candidate extraction module 53 automatically determines that the registered commodity is the object to be imaged.

The registered commodity which has been automatically determined to be the object to be imaged in this manner is hereinafter called a determined commodity.

That is, the determined commodity is a commodity which has been automatically determined as the object to be imaged, and commodity data thereof is automatically registered as a sales commodity.

That is, a possibility that a registered commodity having the similarity of not less than the first threshold value is the object to be imaged is sufficiently high. Accordingly, the POS terminal 11 automatically determines the relevant registered commodity as the commodity that has become the object to be imaged without requiring an input operation by an operator.

It is called automatic registration that one commodity is automatically registered as the object to be imaged without requiring an operation by an operator in this manner.

When a determined commodity is not present and a registered commodity with the similarity of less than the first threshold value and not less than the second threshold value is present in the PLU file F1, the candidate extraction module 53 extracts the registered commodity, as a commodity candidate in which a possibility that the registered commodity is the object to be imaged is high.

In addition, the number of the commodity candidates may be one or a plural number.

When a registered commodity having the similarity of not less than the second threshold value is not present in the PLU file F1, the candidate extraction module 53 determines that a commodity candidate similar to the object to be imaged is not present, and that it is impossible to specify the commodity from the relevant imaged image.

The display control module 54 generates respective display data which are to be outputted to the display 23 for a salesclerk of the POS terminal 11, the display 24 for a customer of the POS terminal 11, the display 106 for a salesclerk of the commodity reading apparatus 101, and the display 109 for a customer of the commodity reading apparatus 101. Further, the display control module 54 outputs the generated display data to the respective displays 23, 24, 106, 109.

For example, the display control module 54 displays the reading screen 70 (the commodity selection screen) for object recognition on the display 106 for a salesclerk of the commodity reading apparatus 101. The reading screen 70 includes candidates for the commodity which has been imaged by the imaging device 164 as described later.

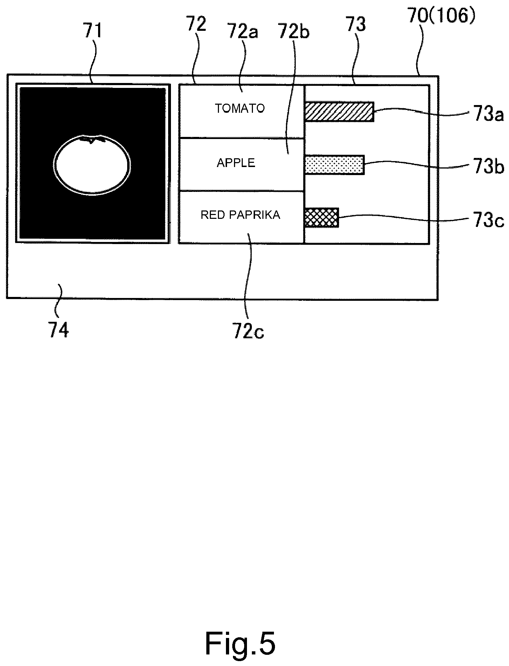

A configuration example of the reading screen 70 will be described later with reference to Fig. 5. Here, a schematic display control method will be described.

The display control module 54 displays in real time the latest imaged image by the imaging device 164 in the reading screen 70.

That is, the display control module 54 displays the imaged images which the image capturing module 51 has captured one by one frame in the order of being captured.

### • Display of determined commodity

When the candidate extraction module 53 has extracted the determined commodity as described above, the display control module 54 displays that sales registration with respect to the relevant commodity has been automatically made, along with the information such as the commodity name and the price of the determined commodity, on the display 106 for a salesclerk and the display 109 for a customer.

### • Display of commodity candidate

When the candidate extraction module 53 extracts the commodity candidates as described above, the display control module 54 displays selection icons of the respective commodity candidates on the display 106 for a salesclerk.

At this time, the display control module 54 (the commodity candidate display means) displays the respective commodity candidates on the display 106 for a salesclerk, in a display aspect in which the respective commodity candidates are weighted in accordance with the sizes of the similarities between the reference images of the relevant commodity candidates and the imaged image.

Specifically, the display control module 54 (the similarity graphic display means) displays the selection icons for accepting selection of the respective commodity candidates as the respective commodity candidates, on the display 106 for a salesclerk, for example.

In addition, the display control module 54 displays images (for example, bar graphs described later) in which the similarities between the reference images of the respective commodity candidates and the imaged image are graphically displayed, along with the display of the above-described selection icons.

In addition, a configuration example of the reading screen 70 (the commodity selection screen), and a display example of the commodity candidates will be described later with reference to Fig. 5 to Fig. 9.

In addition, when the input acceptance module 55 accepts a selection operation of the commodity candidate, the display control module 54 (the commodity information output means) generates display data including the commodity information indicating the commodity, with respect to the commodity candidate which has accepted the relevant selection operation.

And, the display control module 54 outputs the generated display data respectively to the display 23 for a salesclerk of the POS terminal 11, the display 24 for a customer of the POS terminal 11, the display 106 for a salesclerk of the commodity reading apparatus 101, and the display 109 for a customer of the commodity reading apparatus 101.

The input acceptance module 55 accepts various input operations via an input section such as the keyboard 22 or the touch panel 26.

In addition, the input acceptance module 55 (the selection operation acceptance means) accepts an operation to select the commodity which the imaging device 164 has imaged (in other words, the commodity to be subjected to the sales registration processing), from the commodity candidates which the display control module 54 has displayed.

In addition, the input acceptance module 55 may accept an operation from an input section other than the keyboard 22 or the touch panel 26.

For example, the input section may be the keyboard 107 or the touch panel 105 of the commodity reading apparatus 101.

The sales registration module 56 (the commodity information output means) performs a sales registration processing. Specifically, when the input acceptance module 55 accepts a selection operation of the commodity candidate, the sales registration module 56 reads out the commodity information indicating the commodity from the PLU file F1, with respect to the commodity candidate which has accepted the relevant selection operation, and outputs the commodity information in the following method.

The sales registration module 56 generates print data for receipt printing as one of output methods. And the sales registration module 56 outputs the generated print data to the printer 66.

In addition, the sales registration module 56 generates transaction data including the commodity information which have been read out from the PLU file F1, the number of the commodities, and a total amount, a payment amount, a change amount and so on of the relevant transaction, as another output method.

And the sales registration module 56 outputs this transaction data to a sales file.

That is, the sales registration module 56 records (registers) the transaction data in the sales file, as sales data.

In addition, an output destination of the sales data (the above-described transaction data) may be other than the POS terminal 11, and may be an external device such as the store computer SC.

Next, a display example of the commodity candidates and a graphic display example of the similarities of the respective commodity candidates will be described with reference to Fig. 5 to Fig. 9.

Fig. 5 is a diagram showing an example of the reading screen 70 (the commodity selection screen) to be displayed on the display 106 for a salesclerk of the commodity reading apparatus 101.

When the commodity reading apparatus 101 is started, the display control module 54 of the POS terminal 11 displays the reading screen 70 for object recognition on the display 106 for a salesclerk of the commodity reading apparatus 101.

As shown in Fig. 5, the reading screen 70 has an imaged image display area 71, a commodity candidate display area 72, a similarity graphic display area 73, and a registration information display area 74. The reading screen 70 is a commodity selection screen which accepts an operation by an operator for selecting any one candidate for commodity out of the displayed candidates for commodity as described later.

The imaged image display area 71 is an area in which the imaged images that the image capturing module 51 has captured are displayed while being updated one by one frame.

The commodity candidate display area 72 is an area in which selection icons 72a - 72c for selecting the respective commodity candidates are displayed, with respect to the commodity candidates which the candidate extraction module 53 has extracted.

Fig. 5 shows an example in which commodity names (tomato, apple, red paprika) are respectively shown in the selection icons 72a - 72c of the respective commodity candidates.

In addition, the illustration images of the commodity candidates which have been read out from the PLU file F1 may be displayed in the respective selection icons 72a - 72c.

Each of the selection icons 72a - 72c is provided as an operator which is selectable in accordance with a touch operation to the touch panel 105.

An operator performs a touch operation to the selection icon 72a, 72b or 72c of the commodity which the operator himself/herself makes the commodity reading apparatus 101 read out, out of the selection icons 72a - 72c.

The input acceptance module 55 accepts the relevant touch operation.

And the input acceptance module 55 accepts the commodity candidate corresponding to the operated selection icon 72a, 72b or 72c as a determined commodity.

The similarity graphic display area 73 is an area in which the similarities calculated for the respective commodity candidates are displayed for each of the commodity candidates.

The similarities calculated for the respective commodity candidates are similarities between the feature amount of the imaged image displayed in the imaged image display area 71 and the feature amounts of the respective commodity candidates.

Fig. 5 shows an example in which the similarities for the commodity candidates are displayed by bar graphs 73a - 73c, adjacent to the displays of the selection icons 72a - 72c of the respective commodity candidates.

The registration information display area 74 is an area in which information such as a commodity name and a price of the commodity to be subjected to the sales registration, as the commodity information of the determined commodity.

In addition, the determined commodity may be the determined commodity which has been automatically registered as described above, or may be the determined commodity which has been determined by a selection operation to the commodity candidate by an operator.

That is, the display control module 54 updates in real time a frame image to be displayed in the imaged image display area 71 by the imaged image which the image capturing module 51 has captured.

When the determined commodity is present, the display control module 54 displays the commodity information of the determined commodity in the registration information display area 74.

When the determined commodity is not present, but the candidate extraction module 53 has extracted the commodity candidates, the display control module 54 displays the selection icons 72a - 72c of the commodity candidates in parallel in the commodity candidate display area 72.

In addition, the display control module 54 displays the bar graphs 73a - 73c indicating the similarities of the respective commodity candidates in the similarity graphic display area 73.

When the input acceptance module 55 accepts a selection operation to one of the selection icons 72a - 72c, the display control module 54 displays the commodity information for the selected commodity candidate in the registration information display area 74, as the commodity information of the determined commodity.

Here, the imaged image to be captured by the image capturing module 51 is updated for each imaging rate of a frame.

Accordingly, the selection of the determined commodity or the extraction of the commodity candidates and the graphic display of the similarities are to be updated for each relevant imaging rate.

Accordingly, if the commodity candidates which the candidate extraction module 53 has extracted are changed in accordance with the update of the captured image, the commodity candidates to be displayed in the commodity candidate display area 72, and the similarities of the relevant commodity candidates are also changed.

For example, when an operator performs the reading operation while changing a method of holding over a commodity, the similarities are changed in accordance with what surface of the commodity is directed to the imaging device 164 or a degree in which the commodity is exposed to the lighting.

And in accordance with the change of the similarities of the respective commodity candidates, the bar graphs 73a - 73c indicating the similarities change the respective lengths thereof at any time.

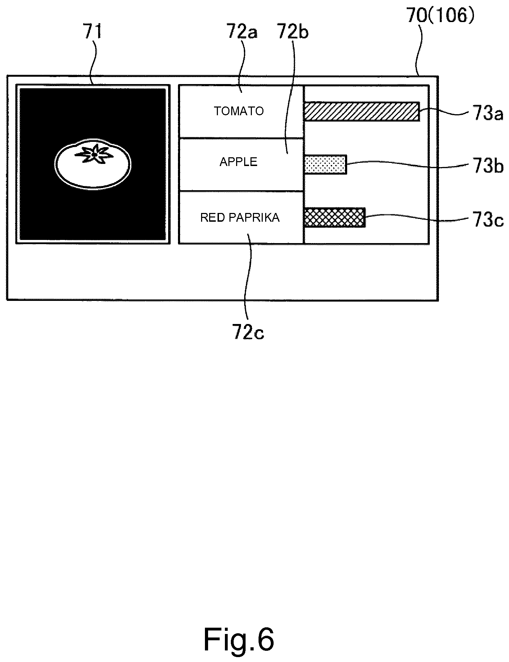

Fig. 6 is a diagram showing a display example of the respective commodity candidates when the similarities for a new imaged image are changed.

When the image capturing module 51 captures a new imaged image, the display control module 54 updates the display of the imaged image display area 71, as shown in Fig. 6.

That is, only a part of a hull of a tomato has been imaged in the imaged image of Fig. 5, but the hull of the tomato is wholly imaged in the imaged image of Fig. 6.

When a method of holding a commodity over the imaging device 164 is changed in this manner, the feature amount thereof may be changed.

In addition, Fig. 5 and Fig. 6 show one example for explanation, and the similarities are not necessarily changed as shown in Fig. 5 and Fig. 6, depending on the existence or nonexistence of a hull of a tomato.

The display control module 54 displays the bar graphs 73a - 73c that are images in which the similarities of the respective commodity candidates are graphically displayed, adjacent to the respective selection icons 72a - 72c.

Regarding the imaged image of Fig. 6, the bar graph 73a indicating the similarity to the "tomato" is increased more than the bar graph 73a at the time of Fig. 5.

On the other hand, the bar graph 73b indicating the similarity to the "apple" is decreased more than the bar graph 73b at the time of Fig. 5.

The operator knows what commodity the commodity which himself/herself holds over for reading is.

That is, the operator knows that the object to be imaged is a tomato.

Whereas, the operator can judge which method of holding over can easily obtain a proper identification result, out of a method of holding over in which the imaged image shown in Fig. 5 has been obtained, and a method of holding over in which the imaged image shown in Fig. 6 has been obtained, from the validity of the bar graphs 73a - 73c graphically displaying the similarities.

That is, in the method of holding over in which the imaged image of Fig. 5 has been obtained, the bar graph 73a of the similarity to the tomato is similar to the bar graph 73b of the similarity to the apple, and accordingly the identification results which are not greatly different have been obtained..

Accordingly, the operator can judge that the validity of the similarity to the tomato which the bar graph 73a of Fig. 5 shows is low.

On the other hand, in the method of holding over in which the imaged image of Fig. 6 has been obtained, the bar graph 73a of the similarity to the tomato is greatly superior to the bar graph 73b of the similarity to the apple.

Accordingly, the operator can judge that the validity of the similarity to the tomato which the bar graph 73a of Fig. 6 shows is high.

The operator sees that the length of the bar graph 73a becomes larger as shown in Fig. 6 than the case of Fig. 5, and can recognize that a method of holding over the commodity by himself/herself has become a more proper method of holding over the commodity.

In the object recognition processing, the extraction of the commodity candidates and the calculation of the similarities are updated in real time, along with the update of the captured image. By this means, the lengths of the bar graphs in which the similarities have been graphically displayed expand and contract in real time.

Whereas, an operator can know in real time that when how a commodity is held over, in what manner the similarities are changed. For the reason, the operator can obtain intuitive and easily understandable feedback at any time, with respect to a method of holding over a commodity.

In addition, the operator continues to obtain the feedback during a commodity reading processing for registration processing. For the reason, the operator can learn a more suitable method of holding over a commodity. And the operator can improve efficiency of the commodity reading processing.

In addition, the similarities of the commodity candidates are changed in accordance with the update of the captured image, in this manner. At this time, when the similarity becomes not less than the above-described first threshold value, the candidate extraction module 53 automatically register the relevant commodity as the determined commodity without requiring a selection operation by the operator.

When the automatic registration is performed, the display control module 54 displays the commodity information of the relevant determined commodity in the registration information display area 74, as described above.

The operator changes a method of holding over a commodity while viewing the graphically displayed similarities, and thereby can realize in what method of holding over, the similarity is increased and the commodity can be easily registered.

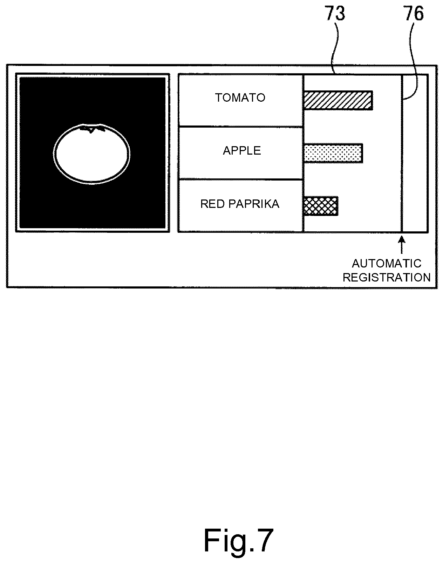

In addition, an automatic registration line 76 (refer to Fig. 7) corresponding to the first threshold value may be displayed in the similarity graphic display area 73.

Fig. 7 is a diagram showing a display example of the automatic registration line 76.

The automatic registration line 76 is an index for an operator to visually confirm whether the similarity of the commodity candidate reaches the first threshold value, or when the similarity of the commodity candidate does not reach the first threshold value, whether the similarity of the commodity candidate is near to or distant from the first threshold value.

For example, when the bar graph indicating the similarity of the commodity candidate has reached the automatic registration line 76, the operator can confirm that the similarity of the relevant commodity candidate has reached the first threshold value. In other words, when the similarity of the commodity candidate becomes the first threshold value, the bar graph indicating the similarity of the commodity candidate reaches (or exceeds) the automatic registration line 76.

The first threshold value is visually shown in this manner, that is the similarity of the commodity candidate to the first threshold value is visually shown, and thereby it is possible to objectively notify the operator, as to in what degree the present method of holding over the commodity is in a suitable state, with respect to the determination reference (the first threshold value) of the automatic registration.

In addition, the graphic display method of the similarity is not limited to the display by a bar graph.

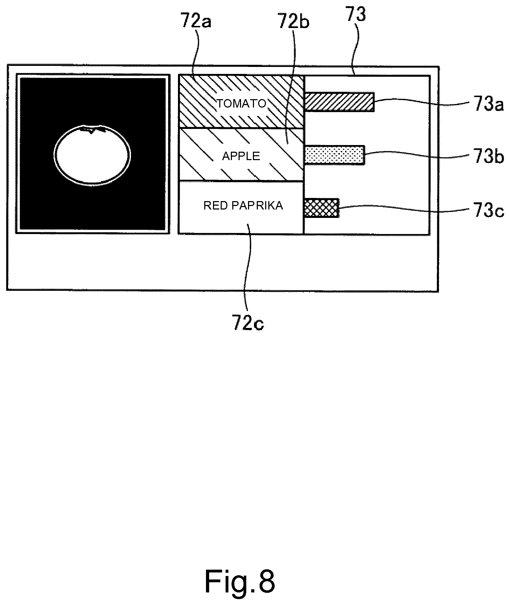

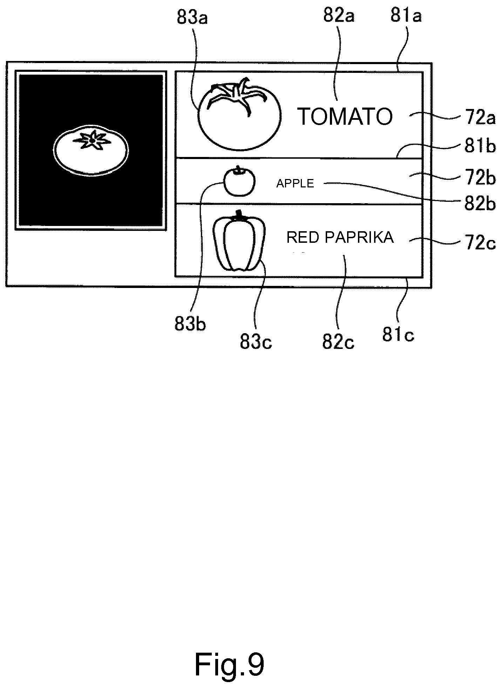

Hereinafter, another graphic display method of the similarity will be described using Fig. 8 and Fig. 9.

Fig. 8 is a diagram showing a display example in the case of changing color densities of the respective selection icons 72a - 72c in accordance with the similarities.

As shown in Fig. 8, the display control module 54 may display the selection icons 72a - 72c of the commodity candidates with densities of display colors in accordance with the similarities of the respective commodity candidates.

In addition, Fig. 8 shows an example in which the similarity graphic display area 73 is displayed adjacent to the selection icons 72a - 72c of the commodity candidates.

In contrast, the graphic display of the similarities is made only with the densities of the display colors of the selection icons, and the similarity display area 73 and the bar graphs 73a - 73c may not be displayed.

Fig 9 is a diagram showing a display example in the case of changing display sizes of the selection icons 72a - 72c in accordance with the respective similarities.

As shown in Fig. 9, the display control module 54 may display the sizes of the selection icons 72a - 72c of the commodity candidates by sizes in accordance with the similarities of the respective commodity candidates.

Fig. 9 shows an example in which illustration images 83a - 83c are displayed, along with commodity names 82a - 82c of the commodity candidates, in the selection icons 72a - 72c, respectively.

The display control module 54 changes the sizes of the selection icons 72a - 72c of the commodity candidates in accordance with the sizes of the similarities of the respective commodity candidates.

That is, as shown in Fig. 9, the display control module 54 changes, with respect to the respective selection icons 72a - 72c, the sizes of texts indicating the commodity names 82a - 82c, and the sizes of the illustration images 83a - 83c, along with the sizes of outer frames 81a - 81c, in accordance with the similarities, respectively.

In addition, in the example shown in Fig.9, the sizes of the whole constituent elements of the selection icons 72a - 72c are respectively changed in accordance with the similarities.

In contrast, the display control module 54 may not change the sizes of the whole constituent elements of the selection icons 72a - 72c.

For example, the display control module 54 changes only the sizes of the outer frames 81a - 81c and the sizes of the illustration images 83a - 83c, and may fix the sizes of the texts showing the commodity names 82a - 82c.

The display sizes relating to the selection icons 72a - 72c are respectively changed in accordance with the similarities in this manner, and thereby it becomes easy for an operator to select the largely displayed commodity candidate.

In addition, the graphic display of the similarities is not limited to the graphic display method as described above.

The display control module 54 may use a display method other than the above, if the commodity candidates are displayed by weighting in accordance with the respective sizes of the similarities between the reference images of the commodity candidates and the imaged image.

For example, when the selection icons 72a - 72c of the commodity candidates are arranged in the commodity candidate display area 72, distances from the imaged image display area 71 may be changed in accordance with the similarities of the respective commodity candidates.

Specifically, the higher similarities the commodity candidates have, the closer to the imaged image display area 71 the relevant selection icons 72a - 72c may be displayed, for example.

In addition, regarding the commodity candidate having a lower similarity compared with the other commodity candidates (for example, when the three commodity candidates are presented, the commodity candidate having the third-highest similarity), the relevant selection icon may be gray-out displayed so that it cannot be selected.

In addition, the similarities may be displayed by weighting in accordance with the similarities by combining the above-described display methods.

Next, a procedure example of a reading processing and a registration processing which the POS terminal 11 executes will be described.

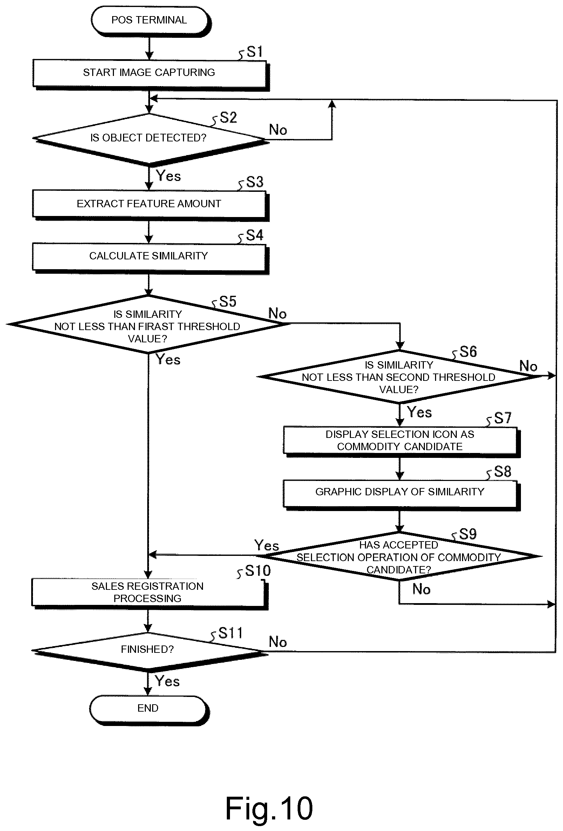

Fig. 10 is a flow chart showing a reading processing and a registration processing which the POS terminal 11 executes.

When an imaging start key is operated in the operation device 104 of the commodity reading apparatus 101, the POS terminal 11 executes a reading processing and a registration processing.

To begin with, in a step S1 of Fig. 10, the CPU 61 (the image capturing module 51) of the POS terminal 11 transmits an imaging start signal to the imaging device 164 of the commodity reading apparatus 101.

The imaging device 164 starts an operation of the image sensor, in response to the imaging start signal, and starts an imaging operation.

The CPU 61 (the image capturing module 51) starts a processing to capture an imaged image for each frame which the imaging device 164 has imaged into the RAM 163.

In addition, the CPU 61 (the commodity detection module 52) starts a processing to detect an object (an object to be imaged, that is, a commodity) to the above-described captured imaged image.

In a step S2, the CPU 61 (the commodity detection module 52) performs a detection processing of the object to be imaged. When the CPU 61 (the commodity detection module 52) detects the object to be imaged (step S2: Yes), the processing of the CPU 61 proceeds to a step S3.

In the step S3, the CPU 61 (the candidate extraction module 53) extracts a feature amount of the above-described object to be imaged.

Next, in a step S4, the CPU 61 (the candidate extraction module 53) compares the above-described extracted feature amount with the feature amount of the registered commodity which the PLU file F1 stores. The CPU 61 calculates a similarity between the above-described feature amount and the feature amount of the registered commodity which the PLU file F1 stores, by performing the above-described comparison.

It is to be noted that the processing of the step S4 is repeated as many times as the number of the registered commodities.

In addition, in the step S2, when the CPU 61 (the commodity detection module 52) does not detect the object to be imaged (step S2: No), the CPU 61 waits for the detection of the object to be imaged.

Next, in a step S5, the CPU 61 (the candidate extraction module 53) determines whether the registered commodity having the similarity of not less than a first threshold value is present in the PLU file F1.

When the CPU 61 determines that the registered commodity having the similarity of not less than the first threshold value is present (step S5: Yes), the processing of the CPU 61 proceeds to a step S10.

In the step S10, the CPU 61 (the candidate extraction module 53) determines the relevant registered commodity as a determined commodity. The CPU 61 (the sales registration module 56) reads out the commodity information of the relevant determined commodity from the PLU file F1. The CPU 61 registers the read commodity information as the commodity information of an object to be sold (sales registration processing).

In addition, the CPU 61 (the display control module 54) displays the commodity information of the determined commodity on the display 106 for a salesclerk and the display 109 for a customer of the commodity reading apparatus 101.

On the other hand, when the CPU 61 determines that the registered commodity having the similarity of not less than the first threshold value is not present in the step S5 (step S5: No), the processing of the CPU 61 proceeds to a step S6.

In the step S6, the CPU 61 (the candidate extraction module 53) determines whether the registered commodity having the similarity of less than the first threshold value and not less than a second threshold value is present in the PLU file F1.

When the CPU 61 determines that the registered commodity having the similarity of less than the first threshold value and not less than the second threshold value is present (step S6: Yes), the processing of the CPU 61 proceeds to a step S7.

In the step S7, the CPU 61 (the candidate extraction module 53) extracts the relevant commodity as a commodity candidate.

The CPU 61 (the display control module 54) displays a selection icon of the extracted commodity candidate in the commodity candidate display area 72 (refer to Fig. 5).

In addition, the commodity name may be displayed or the illustration image of the commodity may be displayed in the relevant selection icon, as described above.

It is to be noted that the processings of the steps S6 and S7 are repeated as many times as the number of the respective registered commodities.

In a step S8, the CPU 61 (the display control module 54) makes the similarities of the respective commodity candidates to be graphically displayed by bar graphs, and displays the relevant bar graphs adjacent to the selection icons of the respective commodity candidates.

In addition, in the step S6, when the CPU 61 determines that the registered commodity having the similarity of less than the first threshold value and not less than the second threshold value is not present (step S6: No), the processing of the CPU 61 returns to the step S2.

In a step S9, the CPU 61 (the input acceptance module 55) determines whether any one of the selection icons has accepted a selection operation.

When the CPU 61 determines that any one of the selection icons has accepted the selection operation (step S9: Yes), the processing of the CPU 61 proceeds to the step S10.

In the step S10, the CPU 61 (the sales registration module 56) determines the commodity candidate corresponding to the relevant selection icon as a determined commodity. And, the CPU 61 reads out the commodity information of the relevant determined commodity from the PLU file F1. The CPU 61 registers the read commodity information as the commodity information of an object to be sold.

In addition, the CPU 61 (the display control module 54) displays that the commodity candidate has been determined as the determined commodity, and the commodity information of the relevant determined commodity on the display 106 for a salesclerk and display 109 for a customer of the commodity reading apparatus 101.

On the other hand, when the CPU 61 determines that any one of the selection icons has not accepted a selection operation (step S9: No), the processing of the CPU 61 returns to the step S2.

That is, while any one of the selection icons does not accept the selection operation, the CPU 61 (the image capturing module 51) continues to capture the frame image from the imaging device 164. Further, the CPU 61 (the commodity detection module 52) continues the detection determination of an object based on the captured frame image.

And the CPU 61 (the candidate extraction module 53) continues the feature amount extraction of the step S3, the similarity calculation of the step S4, the threshold value determination of the steps S5, S6, the extraction and display of the commodity candidate of the step S7, and the graphic display of the similarity of the step S8, in the same procedures as described above.

As this result, when the commodity is automatically registered (refer to Yes of step S5), or the selection operation to the commodity candidate is performed (refer to Yes of step S9), the operator finishes the registration operation of the relevant commodity, and moves to the reading operation for a next commodity.

After the CPU 61 has performed the sales registration in the step S10, the processing of the CPU 61 proceeds to a step S11.

In the step S11 (finished?), the CPU 61 determines whether the settlement key 22f of the keyboard 22 has been operated, that is, whether the completion of the transaction has been declared.

When the CPU 61 determines that the settlement key 22f of the keyboard 22 has been operated, and the completion of this transaction has been declared in the step S11 (step S11: Yes), the CPU 61 finishes the reading processing and the registration processing.

Specifically, the CPU 61 finishes the image capturing, and clears the work memory of the RAM 163. Further, the CPU 61 transmits an imaging completion signal to the commodity reading apparatus 101, to make the imaging operation by the imaging device 164 to be finished.

In addition, when the CPU 61 determines that the settlement key 22f has not been operated in the step S11 (step S11: No), the processing of the CPU 61 returns to the step S2 and continues the procedures of the step S2 and later.

For example, in the above-described embodiment, the POS terminal 11 has the PLU file F1. In contrast, the commodity reading apparatus 101 may have the PLU file F1. In addition, an external device which the POS terminal 11 and the commodity reading apparatus 101 can access may have the PLU file F1.

In addition, in the above-described embodiment, the POS terminal 11 to which the information processing apparatus is applied has been described, but the information processing apparatus is not limited to the POS terminal 11. The information processing apparatus according to the embodiment may be applied to the commodity reading apparatus 101.

In this case, the commodity reading apparatus 101 has only to have the functions of the image capturing module 51, the commodity detection module 52, the candidate extraction module 53, the display control module 54, and the input acceptance module 55, which have been described above.

In addition, the checkout system 1 having the POS terminal 11 and the commodity reading apparatus 101 has been described, as the store system according to the above-described embodiment, but the store system according to the embodiment is not limited to this. The store system according to the embodiment may be one apparatus having the functions of the POS terminal 11 and the commodity reading apparatus 101. As an example of the relevant one apparatus, there is a self-checkout apparatus (a self POS terminal) or the like which is to be used in a store such as a supermarket.

As described above, the above-described embodiment displays the respective commodity candidates by weighting in accordance with the sizes of the similarities between the imaged image and the reference images of the relevant commodity candidates.

Accordingly, an operator can visually confirm the aspect that the similarities between the relevant imaged image and the reference images of the respective commodity candidates are changed, when the imaged image is changed in accordance with a method of holding over the commodity.

That is, according to the above-described embodiment, it is possible to provide an information processing apparatus and an information processing method in which how similarities between an object to be imaged and respective commodity candidates are changed in accordance with a method of holding over the commodity can be easily realized.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing apparatus, comprising:
an imaging device which images a commodity and outputs an imaged image of the commodity;
a memory which previously stores reference images of a plurality of commodities for each of the plurality of commodities;
a display which displays a commodity selection screen including candidates for the imaged commodity, the commodity selection screen accepting an operation to select any one candidate for commodity out of the displayed candidates for commodity; and
a processor which
extracts at least one commodity rom the plurality of commodities stored in the memory as the candidate for commodity, based on similarities of the imaged image and the reference images of the plurality of commodities,
controls the display to display the extracted candidates for commodity in the commodity selection screen, in a display form in which the extracted candidates for commodity are weighted in accordance with sizes of the similarities, and
outputs commodity information indicating the candidate for commodity selected via the commodity selection screen.

2. The information processing apparatus according to Claim 1, wherein:
the processor displays icons corresponding to the candidates for commodity in the commodity selection screen, in order to display the candidates for commodity; and
the icon accepts the operation to select the candidate for commodity corresponding to the relevant icon.

3. The information processing apparatus according to Claim 2, wherein:
the processor displays the similarities of the candidates for commodity corresponding to the icons in the commodity selection screen, in association with the respective icons.

4. The information processing apparatus according to Claim 3, wherein:
the processor displays images in which sizes of the similarities of the candidates for commodity corresponding to the icons are graphically displayed in the commodity selection screen, in association with the respective icons.

5. The information processing apparatus according to Claim 4, wherein:
the processor displays the images in which the sizes of the similarities of the candidates for commodity corresponding to the icons are graphically displayed in the commodity selection screen, adjacent to the respective icons.

6. The information processing apparatus according to Claim 4 or 5, wherein:
the processor displays bar graphs indicating the sizes of the similarities in the commodity selection screen, as the images in which the sizes of the similarities of the candidates for commodity corresponding to the icons are graphically displayed.

7. The information processing apparatus according to any of Claims 2 to 6, wherein:
the processor displays the icon in the commodity selection screen in a display form in which the icons are weighted in accordance with the sizes of the similarities.

8. The information processing apparatus according to Claim 7, wherein:
the processor displays the icons in the commodity selection screen with densities of display colors in accordance with the sizes of the similarities, as the display form.

9. The information processing apparatus according to Claim 7 or 8, wherein:
the processor displays the icons in the commodity selection screen in display sizes in accordance with the sizes of the similarities, as the display form.

10. An information processing method of an information processing apparatus having an imaging device which images a commodity and outputs an imaged image of the commodity, a memory which previously stores reference images of a plurality of commodities for each of the plurality of commodities, and a display which displays a commodity selection screen including candidates for the imaged commodity, comprising:
extracting at least one commodity from the plurality of commodities stored in the memory as the candidate for the imaged commodity, based on similarities of the imaged image and the reference images of the plurality of commodities;
controlling the display to display the extracted candidates for commodity in the commodity selection screen, in a display form in which the extracted candidates for commodity are weighted in accordance with sizes of the similarities;
accepting an operation to select the candidate for commodity via the commodity selection screen; and
outputting commodity information indicating the candidate for commodity which has been selected by accepting the operation.
